# EUROPEAN PATENT APPLICATION

(11) **EP 4 838 194 A1**
(43) Date of publication of application: **11.11.2026**
(21) Application number: 25175508.8
(22) Date of filing: 09.05.2025
(51) Int. Cl.: G01M 13/02, G01M 15/04, G01M 17/007

(54) **DYNAMIC TEST RIG FOR ELECTRIC DRIVELINE**

(71) Applicant: Volvo Car Corporation, 405 31 Göteborg (SE)
(72) Inventor: Brunberg, Johan, SE-405 31 Göteborg (SE)
(74) Representative: Nederlandsch Octrooibureau

(57) **Abstract**

A test rig for evaluating a performance of a fluid within a test object while driving a vehicle, the dynamic test rig comprising a support structure having first means for attaching the test object to the support structure and second means for attaching the support structure to the vehicle; an electric motor connected to the test object such that when the electric motor is started, the fluid moves within the test object; wherein the test object comprises at least a part of a powertrain to be tested; and wherein, when the support structure is attached to the vehicle and the vehicle is being driven, a force acting on vehicle is substantially transferred to the fluid within the test object.

## Description

### TECHNICAL FIELD

The present disclosure relates to a method and a dynamic test rig for evaluating a performance of a fluid within a test object while driving a vehicle. The disclosure further relates to a vehicle comprising the dynamic test rig.

### BACKGROUND ART

As an important component of power transmission in vehicles, the design and optimization of the gearing system is crucial to the vehicle's overall performance. Improving the efficiency of the gearing system not only reduces energy consumption but also lowers operating costs and enhances the market competitiveness of the vehicle.

During the development and manufacturing, the designs for gear systems are extremely wide. Therefore, investigating the dynamic of fluid during the design process holds significant theoretical and practical value.

Typically, the gearbox is subjected to a test on a test bench to evaluate whether it can meet various requirements. During testing liquids contained within the gearbox, such as fuel, lubricating oil, antifreeze, etc., are subjected to visual inspection by a technician or by manually monitoring the gearbox by providing a monitoring camera.

### SUMMARY

In an example of the present disclosure, a test rig for evaluating a performance of a fluid within a test object while driving a vehicle is provided. The test rig comprising: a support structure having first means for attaching the test object to the support structure and second means for attaching the support structure to the vehicle; wherein the test object is within a transparent cover and comprises at least a part of a powertrain to be tested; and wherein, when the support structure is attached to the vehicle and the vehicle is being driven, a force acting on vehicle is substantially transferred to the fluid within the test object

Typically, when designing a new electric driveline (or a part of it), a prototype is tested on a test bench. Test benches (or test rigs) include a system for mimic the movement of the vehicle. However, this mimic is not fully realistic. In the invention, by testing the test object while driving, the forces due to the movement of the vehicle are realistic applied to the fluid (real G forces). Thus creating a simple and easy way to understand the dynamics of the lubricant/transmission oil (fluid) where problematic areas could be detected and mitigated in an early stage of the design-phase of the electric driveline. Furthermore, the invention requires less space for the test structure than test benches (because less components as the system for mimic the movement of the vehicle), also cheaper.

In an example of the present disclosure, the fluid within the test object can be set into motion by different methods. In a first method, by movement of the test object as a such, the fluid within the test object is set in motion. That is, since the test object is attached to a vehicle, forces (e.g. G forces) generated while driving the vehicle are applied to the test object which in turn move the fluid. In a second method, an electric motor is connected to the test object such that when the electric motor is started, the fluid moves within the test object. For example, the electric motor can be directly connected to one component (e.g. a shaft) of the test object. Thus, by starting the electric motor the moving parts within the test object rotate, thereby setting the fluid within the test object in motion. In a third method, a pump (e.g. a fluid pump) is connected to the test object such that when the pump is started, the fluid moves within the test object. It should be understood, that these different methods described above can be individually performed or can be combined in order to set the fluid within the test object in motion.

In an example of the present disclosure, the second means for attaching the support structure to the vehicle comprises a fastener which extends through a through hole provided on the support structure for attaching the support structure to a vehicle floor of the vehicle, wherein the vehicle floor comprises a floor usable for passenger seat or a floor of a cargo compartment of the vehicle. By attaching the support structure to an already present structure usable for attaching the passenger seat, thereby making the structure compatible with most of vehicles (like 'universal' structure). If mounted on a front passenger cabin, e.g. by removing a front passenger seat thereof and replacing by the support structure, a user can sit on rear passenger seat and directly see the behaviour of the fluid while testing.

In an example of the present disclosure, wherein the second means further comprises: a rail slidable over a guide fixedly attached onto or integrated into to the vehicle floor, the rail including a plurality of holes including the through hole for adjusting the rail to the guide. Making the attachment even more 'universal' because can be move horizontally so all components of the test rig can fit inside within the passenger cabin or cargo compartment.

In an example of the present disclosure, wherein support structure further comprising: a first support structure comprising the first means for attaching the powertrain test object to the first support structure, and a second support structure comprising the second means for attaching the second support structure to the vehicle. By having two separate support structures, one can be universal for attaching to the vehicle while the other one can be designed for specific test object. Versatility.

In an example of the present disclosure, wherein the second support structure comprises a base and a plurality of legs extending from the base. Space left from one end of the legs to the base can be used for placing components of the test rig, like a battery for the electric motor, a fluid pump, etc.

In an example of the present disclosure, wherein support structure further comprises: means for controlling a tilt angle between the first support structure and the second support structure such that a relative position of the first support structure with respect to the second support structure is adjustable from a first position corresponding to a tilt angle equal to 0 degrees and a second position different than the first position. By controlling the tilt angle, when a test object is placed in the support structure, the test object can be tilted to match a tilt position the test object would have if would had being placed in real position within the vehicle. Further, this arrangement also allows for large tilt angles and ability to quickly change the tilt angle.

In an example of the present disclosure, the test rig of claim can further comprise a fluid leakage retention tray attached to at least one of the first support structure and the second support structure. In case of leakage, the tray will retain the oil, avoiding the oil to be splash over the vehicle and electric components placed below the tray.

In an example of the present disclosure, the test rig can further comprise a motor fixture attached to the first support structure for fixing the electric motor, the motor fixture comprising means for adjusting a position the electric motor relative to the test object. By this arrangement, the dynamic test rig has flexibility for testing the same test object using different electric motors. The electric motor will move the different elements within the test object (if a gearbox is tested, the electric motor will move the main gear and/or an actuator will change gears).

In an example of the present disclosure, the support structure is made of metal or a sturdy plastic. Examples of metals are iron, aluminium, titanium, coper, and the like. It should be understood that metals also includes metallic alloys as steel. Sturdy plastic in the context of the present invention refers to a plastic having outstanding toughness capable of support the weight of the test object and rest of components. Examples of sturdy plastics are polycarbonate (PC), acrylonitrile butadiene styrene (ABS), polyvinyl chloride (PVC), high-density polyethylene (HDPE), high-impact polystyrene (HIPS), polyoxymethylene (POM), and the like.

In an example of the present disclosure, the test object is one of an electric driveline, an electric machine, an internal combustion engine, a gearbox, or a scale-model of one component of an electric driveline, an electric machine, an internal combustion engine or a gearbox.

In an example of the present disclosure, the test object comprises multiple elements including at least one of a gear, a shaft and a bearing; and wherein each of the at least one gear, shaft and bearing is made of metal and remaining elements of the multiple elements are made of plastic. If those parts are made of metal and rest are made of plastic, costs are reduced for testing prototypes.

In an example of the present disclosure, the test rig can further comprise at least one sensor, and a control unit attached to the support structure and configured to receive information from the at least one sensor about the fluid moving within the test object while driving the vehicle; wherein the at least one sensor comprises at least one of a pressure sensor, a temperature sensor, an accelerometer and an optical sensor.

In an example of the present disclosure, a vehicle comprising the test rig is provided.

In an example of the present disclosure, a method for evaluating a dynamic performance of a fluid within a test object while driving a vehicle is provided. The method comprising: assembling the test object within a transparent cover, wherein the test object comprises at least a part of a powertrain to be tested; attaching the test object to a support structure; adding fluid into the test object; and monitoring a dynamic state of the fluid moving within the test object while driving the vehicle; wherein, when the support structure is attached to the vehicle and the vehicle is being driven, a force acting on vehicle is substantially transferred to the fluid within the test object.

In an example of the present disclosure, the method further comprises connecting an electric motor to the test object and starting the electric motor such that the fluid moves within the test object.

In an example of the present disclosure, the method further comprises connecting a pump to the test object and starting the pump such that the fluid moves within the test object.

In an example of the present disclosure, the method further comprises adjusting the test object to a specific posture relative to the vehicle by controlling a tilt angle.

The test rig may include a number of additional features and structures. These features and structures may be included in various combinations that include some of these features and structures, all of these features and structures, or one of these features and structures.

### BRIEF DESCRIPTION OF DRAWINGS

The present disclosure will be described in more detail with reference to the drawings that show preferred embodiments, wherein:
FIG. 1A shows a vehicle including a test rig according to an exemplary embodiment of the invention;
FIG. 1B shows a perspective view of a test rig according to an exemplary embodiment of the invention;
FIG. 2 shows a perspective view of a first support structure according to an exemplary embodiment of the invention;
FIG. 3 shows a perspective view of a second support structure according to an exemplary embodiment of the invention; and
FIG. 4 shows a block diagram of method for evaluating a dynamic performance of a fluid within a test object while driving a vehicle according to an exemplary embodiment of the invention.

The drawing figures do not limit the present disclosure to the specific embodiments disclosed and described herein. The drawings are not necessarily to scale, emphasis instead being placed upon clearly illustrating the principles of the preferred embodiments.

### DESCRIPTION OF EMBODIMENTS

The aspects of the present disclosure will now be described more fully hereinafter with reference to the accompanying drawings, in which certain embodiments of the disclosure are shown. The use of the same reference numerals may indicate similar or identical items. Various embodiments may utilize elements and/or components other than those illustrated in the drawings, and some elements and/or components may not be present in various embodiments. Elements and/or components in the figures are not necessarily drawn to scale. Throughout this disclosure, depending on the context, singular and plural terminology may be used interchangeably.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present disclosure, and similarly, a second element may be referred to as a first element.

Coordinate axes in the x , y and z direction are shown in each figure to assist in the explanation of the relative arrangement of features of the capsule. Naturally, orientation terms such as "upper", "lower", "left", "right", etc. as used herein is only for description other than limitation on orientation of various devices and parts used.

In automotive engineering, there are three terms related to components of a vehicle which produce and transmit torque to the wheels. These three terms are powertrain, drivetrain and driveline. The powertrain refers to components in a vehicle that work together to generate power and deliver it to the wheels, enabling movement. The drivetrain refers to components of the vehicle that work together to ensure that the power generated by the engine is delivered to the wheels, allowing the vehicle to move. The driveline refers to components of the vehicle that transfer rotational power from transmission to the wheels. In a nutshell, the powertrain includes the vehicle engine and the drivetrain, the drivetrain includes the transmission and the driveline, and the driveline includes a gearbox and a differential among other components.

In the present disclosure, a vehicle engine may refer to an internal combustion engine, The internal combustion engine operates by burning fuel inside cylinders to create controlled explosions, converting chemical energy into mechanical energy that powers the vehicle.

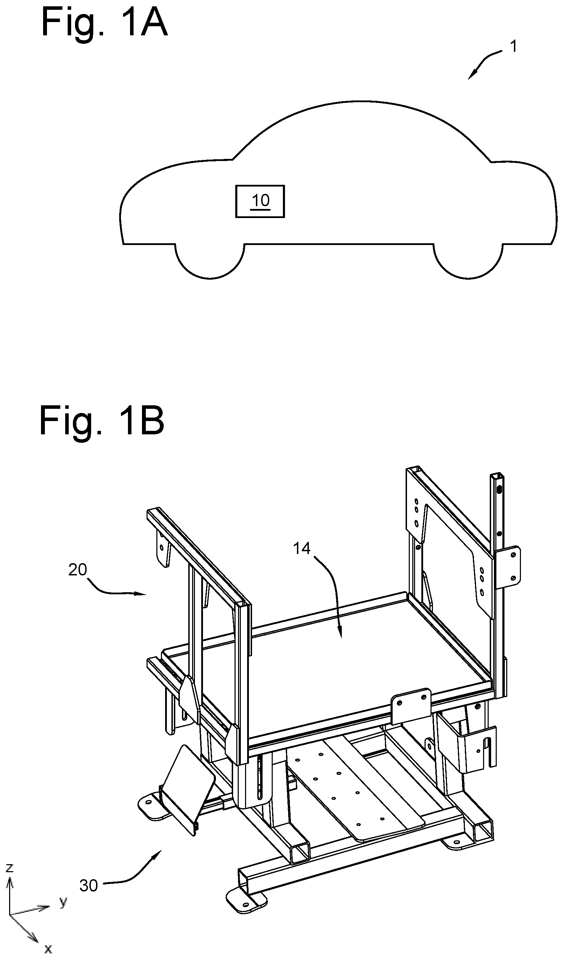

FIG. 1A shows a vehicle including a test rig according to an exemplary embodiment of the invention and FIG. 1B shows a perspective view of a test rig according to an exemplary embodiment of the invention.

The vehicle 1 includes a test rig 10. While a test rig and/or its components are described below with reference to a wheeled vehicle, such as an automobile, the one or more embodiments described herein are not limited to this use. A test rig described herein can be utilized with any of an electric vehicle (EV), a military vehicle, marine vehicle such as a boat, winged vehicle such as a plane, and/or rotor-ed vehicle such as a helicopter.

As shown in FIG. 1B, the test rig 10 comprises a support structure 11 having first means for attaching the test object to the support structure and second means for attaching the support structure to the vehicle.

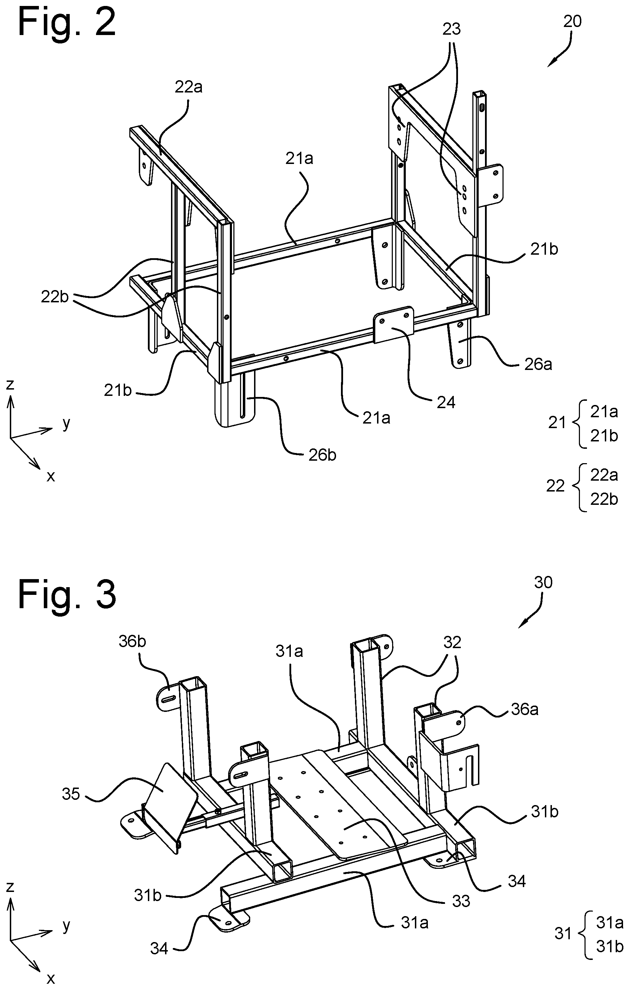

Optionally, the support structure can comprise a first support structure 20 and a second support structure 30. Details of the first support structure 20 and the second support structure 30 are given with respect to FIG. 2 and FIG. 3 respectively.

The test rig 10 comprises a fluid leakage retention tray 14 attached to at least one of the first support structure 20 and the second support structure 30. The fluid leakage retention tray 14 is a flat rectangular base that has slightly raised edged perpendicular to the flat rectangular base. In case of leakage, the tray will retain the oil, avoiding the oil to be splash over the vehicle and electric components placed below the tray. The fluid leakage retention tray 14 is made of plastic or metal. The fluid leakage retention tray 14 does not need to be made of sturdy plastic, thereby any plastic can be used. Although the fluid leakage retention tray 14 is described as having a rectangular shape, it should be understood that fluid leakage retention tray 14 can be made in a range of shapes including circular, oval, square, and the like.

The support structure 10 is made of metal or a sturdy plastic. Examples of metals are iron, aluminium, titanium, coper, and the like. It should be understood that metals also includes metallic alloys as steel. Sturdy plastic in the context of the present invention refers to a plastic having outstanding toughness capable of support the weight of the test object and rest of components. Examples of sturdy plastics are polycarbonate (PC), acrylonitrile butadiene styrene (ABS), polyvinyl chloride (PVC), high-density polyethylene (HDPE), high-impact polystyrene (HIPS), polyoxymethylene (POM), and the like.

The test object comprises at least a part of a powertrain to be tested. For example, the test object can include an electric driveline, an electric machine, an internal combustion engine, a gearbox, or a scale-model of one component of an electric driveline, an electric machine, an internal combustion engine or a gearbox.

Optionally, the powertrain test object can include multiple elements including at least one of a gear, a shaft and a bearing. Each of the at least one gear, shaft and bearing is made of metal and remaining elements of the multiple elements are made of plastic. For example, the test object can be a gearbox.

FIG. 2 shows a perspective view of a first support structure 20 according to an exemplary embodiment of the invention.

The first support structure 20 comprises a bottom frame 21 and two side frames 22 extending perpendicularly from the bottom frame 21 in the Z direction.

The bottom frame 21 includes two parallel first bottom sides 21a in the X-axis and two parallel second bottom sides 21b in the Y-axis that are perpendicular to the two parallel first bottom sides 21a. A length of the two parallel first bottom sides 21a can be equal to or different than a length of the two parallel second bottom sides 21b. By having four sides connected in a perpendicular fashion to each other, the bottom frame 21 provides good stability. Alternatively, the bottom frame 21 can include tree sides connected to each other forming a triangle, or can include more than four sides forming a polygonal structure.

Optionally, the fluid leakage retention tray 14 as the one shows in FIG. 1B, can be attached to the bottom frame 21.

A side frame 22 includes an upper side 22a and two lateral sides 22b each extending perpendicularly from the upper side 22a in the Z-axis. The two side frames 22 can be equal of different to each other. Optionally, the two lateral sides 22b in one side frame 22 can be closer (in the Y-axis) to the other than the two lateral sides 22b in the other side frame 22. Optionally, a height (in the Z-axis) of one lateral side 22b of a side frame 22 can be equal to or different than a height (in the Z-axis) of the other lateral side 22b of the same frame or a different side frame 22. The height of the lateral sides 22b may be such that a maximum height of the first support structure 20 in the Z-axis allows for placing the test rig 10 within the vehicle.

Each side frames 22 includes the first means 23 for attaching the powertrain test object to the first support structure

The first support structure 20 also includes a motor fixture 24. The motor fixture 24 is arranged such that an electric motor can be fixed to the first support structure 20. Optionally, the motor fixture 24 can include means for adjusting a position (in the Z-axis) the electric motor relative to the test object.

The control fixture 35 has an inclined surface relative to the vehicle floor (e.g. an X-Y plane) attached to one the two parallel second sides 31b. Optionally, the control fixture 35 is arranged to hold and/or attach a control unit (not shown) controlling the monitoring of the test object.

FIG. 3 shows a perspective view of a second support structure 30 according to an exemplary embodiment of the invention.

The second support structure 30 comprises a base frame 31 and at least one leg 32 extending from the base frame in the Z direction. Optionally, the at least one leg 32 can comprise four legs.

The base frame 31 includes two parallel first base sides 31a in the X-axis and two parallel second base sides 31b in the Y-axis that are perpendicular to the two parallel first base sides. A length (in the X-axis) of the two parallel first base sides 31a can be equal to or different than a length (in the Y-axis) of two parallel second base sides 31b. By having four base sides connected in a perpendicular fashion to each other, the base frame provides good stability. Alternatively, the base frame 31 can include tree base sides connected to each other forming a triangle, or can include more than four base sides forming a polygonal structure.

Each of the legs 32 extends from one of the two parallel first base sides 31a or one of the two parallel second base sides 31b. Legs 32 may have an equal or a different length (in the Z-axis). In the example of FIG. 2, both legs 32 extends from each of the two parallel second sides 31b, wherein a length of two legs extending from one of the two parallel second sides 31b is shorter than a length of two legs extending from the other one of the two parallel second sides 31b. The length of the legs may be such that a maximum height of the second support structure 30 in the Z-axis allows for placing the test rig 10 within a vehicle.

Each of the legs 32 comprises a hole 36a or elongated hole 36b for attaching the first support structure 20 to the second support structure 30.

The base frame 31 further includes a base plate 33. The base plate 33 extends between the two parallel first sides 31a. Alternatively, the base plate 33 may extend between the two parallel second sides 31b. By having the base plate 33, extra components of the test rig 10 can be securely attached to the support structure 11. For example, a battery, a pump, and the like.

The base frame 31 includes the second means 34 for attaching the second support structure 30 to the vehicle (not shown). The second means could also be called vehicle attaching means. For example, the vehicle attaching means 34 comprises at least one screw which extends through a through hole, provided on at least one of two parallel first base sides 31a and the two parallel second base sides 31b, and which is screwable for attaching the second support structure 30 to the vehicle. Although a screw is mentioned, it should be understood that any other means for attaching can be used, as a knob stud, pin, rivet, and the like. As another example, the second means 34 for attaching the second support structure 30 to the vehicle can comprise a rail slidable over a guide fixedly attached onto or integrated into to the vehicle floor, the rail including a plurality of holes including the through hole for adjusting the rail to the guide.

The base frame 31 can also include control fixture 35. The control fixture 35 has an inclined surface relative to the vehicle floor (e.g. the X-Y plane) attached to one the two parallel second sides 31b. Optionally, the control fixture 35 is arranged to hold and/or attach a control unit (not shown) controlling the monitoring of the test object.

Optionally, the second support structure 30 can be made of metal or a robust plastic or a combination thereof.

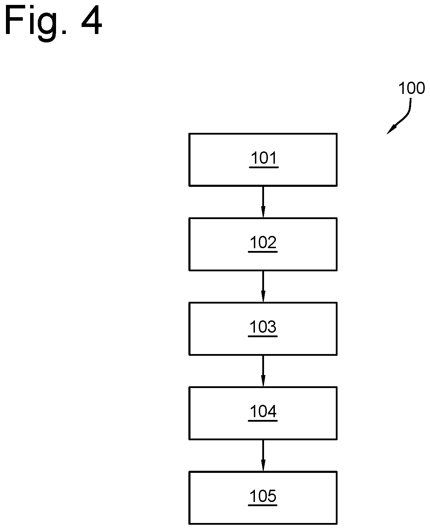

FIG. 4 shows a block diagram of method 100 for evaluating a dynamic performance of a fluid within a test object while driving a vehicle according to an exemplary embodiment of the invention.

At step 101, the test object, comprising at least a part of a powertrain to be tested, is assembled within a transparent cover. By providing a transparent cover, the fluid within the test object can be observed, for example, by an observer or user or by a camera or cameras.

At step 102, the test object is attached to a support structure. Optionally, an electric motor and/or a fluid pump is connected to the test object.

For example, an electric motor can be connected to the test object such that when the electric motor is started, the fluid moves within the test object. The electric motor can be directly connected to one component (e.g. a shaft) of the test object. Thus, by starting the electric motor the moving parts within the test object rotate, thereby setting the fluid within the test object in motion. As another example, a pump (e.g. a fluid pump) can be connected to the test object such that when the pump is started, the fluid moves within the test object.

At step 103, the support structure is attached to the vehicle such that when the support structure is attached to the vehicle and the vehicle is being driven, a force acting on vehicle is substantially transferred to the fluid within the test object.

Fluid is added into the test object prior driving the vehicle such that the fluid moves within the test object while driving the vehicle at step 104.

At step 105, a dynamic state of the fluid moving within the test object is monitored while driving the vehicle.

While the present disclosure has been described with reference to exemplary embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure is not limited to the particular embodiments disclosed, but that the present disclosure will include all embodiments falling within the scope of the appended claims.

### List of reference numbers:

| | | | |
|---|---|---|---|
| 1 | vehicle | 30 | second support structure |
| 10 | test rig | 31 | base frame |
| 11 | support structure | 31a | first base side |
| 14 | fluid leakage retention tray | 31b | second base side |
| 20 | first support structure | 32 | leg |
| 21 | bottom frame | 33 | base plate |
| 21a | first bottom side | 34 | second means |
| 21b | second bottom side | 35 | control fixture |
| 22 | side frame | | |
| 22a | upper side | | |
| 22b | lateral side | | |

## Claims

1. A test rig for evaluating a performance of a fluid within a test object while driving a vehicle, the dynamic test rig comprising:
- a support structure having
∘ first means for attaching the test object to the support structure, and
∘ second means for attaching the support structure to the vehicle;
- wherein the test object is within a transparent cover and comprises at least a part of a powertrain to be tested; and
- wherein, when the support structure is attached to the vehicle and the vehicle is being driven, a force acting on the vehicle is substantially transferred to the fluid within the test object.

2. The test rig of claim 1, wherein the second means for attaching the support structure to the vehicle comprises
- a fastener which extends through a through hole provided on the support structure for attaching the support structure to a vehicle floor of the vehicle,
- wherein the vehicle floor comprises a floor usable for passenger seat or a floor of a cargo compartment of the vehicle.

3. The test rig of claim 2, wherein the second means further comprises:
- a rail slidable over a guide fixedly attached onto or integrated into to the vehicle floor,
- the rail including a plurality of holes including the through hole for adjusting the rail to the guide.

4. The test rig of any preceding claim, wherein support structure further comprising:
- a first support structure comprising the first means for attaching the powertrain test object to the first support structure, and
- a second support structure comprising the second means for attaching the second support structure to the vehicle.

5. The test rig of claim 4, wherein the second support structure comprises a base and a plurality of legs extending from the base.

6. The test rig of claim 4-5, wherein support structure further comprises:
- means for controlling a tilt angle between the first support structure and the second support structure such that a relative position of the first support structure with respect to the second support structure is adjustable from a first position corresponding to a tilt angle equal to 0 degrees and a second position different than the first position.

7. The test rig of claim 4-6, further comprises
- a fluid leakage retention tray attached to at least one of the first support structure and the second support structure.

8. The test rig of claim 4-7, further comprising:
- a motor fixture attached to the first support structure for fixing the electric motor,
- the motor fixture comprising means for adjusting a position the electric motor relative to the test object.

9. The test rig of any preceding claim, wherein the support structure is made of metal or a sturdy plastic.

10. A test rig of any preceding claim, wherein the test object is one of an electric driveline, an electric machine, an internal combustion engine, a gearbox, or a scale-model of one component of an electric driveline, an electric machine, an internal combustion engine or a gearbox.

11. The testing device of claim 10, wherein the powertrain test object comprises multiple elements including at least one of a gear, a shaft and a bearing; and wherein each of the at least one gear, shaft and bearing is made of metal and remaining elements of the multiple elements are made of plastic.

12. The test rig of any preceding claim, further comprises
- at least one sensor, and
- a control unit attached to the support structure and configured to receive information from the at least one sensor about the fluid moving within the test object while driving the vehicle.
- wherein the at least one sensor comprises at least one of a pressure sensor, a temperature sensor, an accelerometer and an optical sensor.

13. A vehicle comprising the test rig according to any preceding claim.

14. A method for evaluating a performance of a fluid within a test object while driving a vehicle, the method comprising:
- assembling the test object within a transparent cover, wherein the test object comprises at least a part of a powertrain to be tested;
- attaching the test object to a support structure;
- connecting an electric motor to the test object;
- attaching the support structure to the vehicle;
- adding fluid into the test object; and
- monitoring a dynamic state of the fluid moving within the test object while driving the vehicle;
- wherein, when the support structure is attached to the vehicle and the vehicle is being driven, a force acting on vehicle is substantially transferred to the fluid within the test object.

15. The method of claim 14, further comprising:
- adjusting the test object to a specific posture relative to the vehicle by controlling a tilt angle.
